# EUROPEAN PATENT SPECIFICATION

(11) **EP 0 655 493 B1**
(45) Date of publication and mention of the grant of the patent: **22.09.1999**
(21) Application number: 94870186.7
(22) Date of filing: 29.11.1994
(51) Int. Cl.: C10L 5/48

(54) **Method for transforming a compact waste product of the petrochemical industry**
Verfahren zur Umwandlung von einem kompakten Abfallprodukt aus der petrochemischen Industrie
Procédé pour la transformation d'un produit compact résiduaire de l'industrie pétrochimique

(30) Priority: 29.11.1993 BE 9301313
(43) Date of publication of application: 31.05.1995
(73) Proprietor: APPLICATION OF CLEANING TECHNIQUES ON SOILS, in het kort SOILS, B-2070 Zwijndrecht (BE)
(72) Inventor: Ponnet, Luc, B-9219 Gentbrugge (BE)
(74) Representative: Pieraerts, Jacques

(56) References cited:
- EP-A- 0 076 397
- DE-A- 1 471 600
- DE-A- 2 505 373

## Description

This invention relates to a method for transforming a waste product of the petrochemical industry, i.e. acid tar, in the form of a compact mass.

The invention has also as object to make said waste products usable as component for composing a fuel of high caloric value.

By the word "acid tar" is meant a waste product of the petrochemical industry. This waste product has a pitch-like colour, comprises a high percentage of oils and fats and is generally strongly sulphurous. Acid tar has a low pH-value.

Depending on the petrochemical process, the basic product from which acid tar is a residue and the end product, innumerable sorts of acid tar strongly different from one another exist. Acid tar can appear under the form of a liquid, plastic material. Acid tar can also show a rigid consistency with strong variations concerning the chemical composition thereof.

In the following is meant as acid tar a waste product, irrespective of appearance and chemical composition.

In practice and in general, acid tar belongs to the waste products which are dumped in large quantities on certain places.

In document EP-A-0 076 397 is described a method for recuperating acid tar from petroleum fractions. Remarkable for the method described by this document is the addition of calcium hydroxide to unground acid tar materials and this in a ratio of about 40% lime hydrate per quantity acid tar.

Because according to the present patent application the acid tar materials are first finely milled, a very intimate mixing of these materials with lime hydrate is to be expected. The exothermic reaction is so large that this mixing may not be performed in a drum or a similar closed space. spreading lime hydrate occurs therefore in a next step.

In order to transform this waste product now, in conformity with the method according to the invention, into a component which can be used in the composition of a fuel of high caloric value, the method according to the invention comprises : that recited in the accompanying claims.

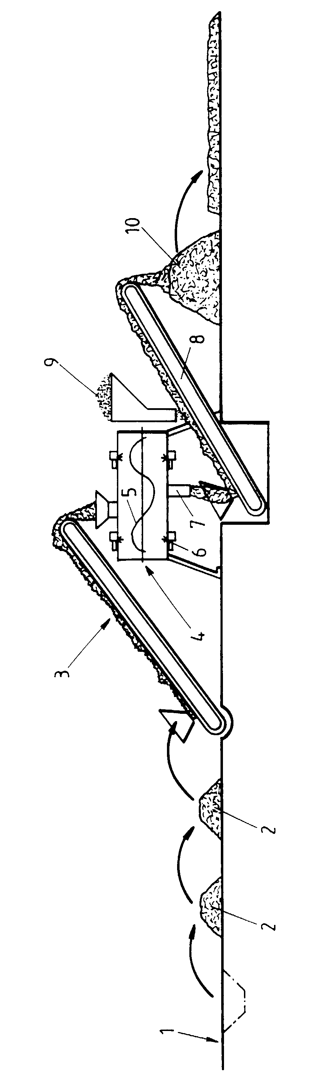

Other details and advantages of the invention will appear from the following description of a method for transforming a waste product of the petrochemical industry. This description is given by way of example and does not limit the invention. The reference numerals relate to the figure annexed hereto.

The unique figure is a schematic representation to illustrate the method according to the invention.

Acid tar 1 is dug up on the spot and processed a number of times and piled up into piles 2. Processing the acid tar which has been dug up can be performed in the most diverse ways. To this end, the apparatus 3 which has served for digging up can also be used for turning the waste product which has been dug up a number of times. By digging up and turning by means of the crane or an apparatus invented therefor, acid tar comes into contact with air. Turning the dug up acid tar over, causes a spontaneous exothermic reaction resulting in i.a. sulphurous vapours flowing through the dug mass and transforming in this way the texture of the acid tar in a more brittle structure.

It is clear that this treatment can be repeated several times.

To obtain a far-reaching grain formation of the dug up acid tar, which is necessary for an intimate mixing with lime hydrate, acid tar is processed in a drum 4. This drum is equipped, on the one hand, with knives 5 and a slowly rotating stirring device and, on the other hand, with quickly rotating knives 6. These latter knives are mounted in or just above the outlet tubes 7. Any other type of drum which delivers an end product with the required fine granulometry, can of course be employed. From the drum 4 the fine milled acid tar arrives onto a conveyor belt 8 (or a technically equivalent component). In this stage, lime hydrate 9 is spread onto the conveyed acid tar. With lime hydrate (slaked lime) the desired intimate mixing of the milled acid tar with the neutralising substance is obtained. The product coming from the conveyor is put down in one or more piles 10 where it is allowed to react for about 48 hours. This reaction increases the temperature of the product which is then spread open in 11 to enhance the cooling thereof.

It is therefore to be advised to process the slaked lime intimately with the dug up and mixed acid tar. Moreover, by adding lime, an important part of the sulphurous vapours is neutralised.

It is then also very characterising for the invention that the acid tar is first crumbled mechanically to a large extent and is mixed intimately with slaked lime because a far-reaching and controllable reaction then occurs in the mixture.

Finally, to transform this neutralised and finely milled material into a fuel of high caloric value, the neutralised acid tar mixture is mixed with dry products which show themselves a high energetic value. In this respect are meant : wood waste in the form of chips or sawdust either or not mixed with oils and/or fats ; paper, i.a. milled paper ; plastic in the milled or shredded form.

The obtained mixture is milled to a grain size of up to about 10 mm at the most.

This product can be considered as an excellent fuel which can be used in industrial combustion furnaces. An example of such industrial combustion furnaces are cement furnaces.

In summary, it can thus still be underlined that the method aims at a slow but extremely far-reaching neutralisation of the acid tar. A first important step hereto is the aeration and the transformation of the acid tar into a product with a brittle structure. Further, the method according to the invention avoids a brusque and strongly exothermic reaction in a drum mill, by mixing the aerated acid tar with slaked lime (with a very fine powdery structure) in the open air. Neutralising an acid tar mass by addition of lump lime in unslaked form and performing the reaction between unslaked lime particles and acid tar in a closed space, such as a drum mill, are therefore to be avoided totally.

## Claims

1. Method for transforming a compact mass of acid tar, characterised in that said method comprises the steps of:
a) mechanically digging up acid tar with a digging machine, mechanically processing said acid tar for several times, possibly with the same digging machine, and putting said acid tar into piles,
b) processing the thus obtained aerated tar once more by grinding the tar in a drum mill until the ground tar has a grain size of maximum 40 mm
c) neutralising the ground tar for at least 12 hours by adjusting the pH of the ground tar to at least 6 by adding lime hydrate
d) adding to the neutralised tar a fine grained material chosen from the group of wood waste, paper or plastics waste material in the milled or shredded form.

2. Method as claimed in claim 1, characterised in that the lime hydrate is added to the dug up tar in such a way that the exothermic reaction which occurs during the mixing of the acid tar with the lime hydrate progresses gradually at a temperature of below 100°C.

3. Method as claimed in claim 1 or 2, characterised in that lime hydrate is added in the form of slaked lime.

4. Method as claimed in any one of claims 1 to 3, characterised in that the neutralised tar is mixed and calibrated until the end product shows a grain size of up to about maximum 10 mm.

## Patentansprüche

1. Verfahren zur Umwandlung einer kompakten Masse von saurem Teer bzw. Säureteer, dadurch gekennzeichnet, daß das Verfahren die Schritte umfaßt:
a) mechanisches Abtragen bzw. Baggern von Säureteer mit einer Baggermaschine, mehrmaliges mechanisches Verarbeiten des Säureteers mehrere Male, gegebenenfalls mit derselben Baggermaschine, und Anordnen des Säureteers in Haufen,
b) Verarbeiten des derart erhaltenen, belüfteten Teers noch einmal durch Mahlen des Teers in einer Trommelmühle, bis der gemahlene Teer eine Korngröße von maximal 40 mm aufweist,
c) Neutralisieren des gemahlenen Teers für wenigstens 12 h durch Einstellen des pH-Werts des gemahlenen Teers auf wenigstens 6 durch Hinzufügen von Kalkhydrat bzw. Kalziumhydroxid,
d) Hinzufügen eines fein gemahlenen Materials, gewählt aus der Gruppe von Holzabfällen, Papier oder Kunststoffabfallmaterial in gemahlener oder zerkleinerter bzw. geschreddeter Form, zu dem neutralisierten Teer.

2. Verfahren nach Anspruch 1, dadurch gekennzeichnet, daß das Kalkhydrat zu dem abgetragenen Teer auf derartige Weise hinzugefügt wird, daß die exotherme Reaktion, die während des Mischens des Säureteers mit dem Kalkhydrat auftritt, schrittweise bzw. stufenweise bei einer Temperatur von unter 100 °C stattfindet.

3. Verfahren nach Anspruch 1 oder 2, dadurch gekennzeichnet, daß das Kalkhydrat in Form von gelöschtem Kalk zugefügt wird.

4. Verfahren nach einem der Ansprüche 1 bis 3, dadurch gekennzeichnet, daß der neutralisierte Teer gemischt und kalibriert wird, bis das Endprodukt eine Korngröße von etwa maximal 10 mm aufweist.

## Revendications

1. Procédé de transformation d'une masse compacte de goudron acide, caractérisé en ce que ledit procédé comporte les étapes suivantes
a) extraction mécanique du goudron acide à l'aide d'une machine d'extraction, manipulation mécanique répétée de ce goudron acide, éventuellement à l'aide de la même machine d'extraction et mise en tas dudit goudron acide,
b) nouvelle manipulation du goudron acide aéré qui consiste à broyer le goudron dans un broyeur jusqu'à ce que le goudron broyé présente une dimension granulaire de maximum 40 mm,
c) neutralisation pendant au moins 12 heures du goudron broyé en ajustant le pH du goudron broyé à au moins 6 par addition d'oxyde de calcium,
d) addition au goudron neutralisé de matériaux finement moulus choisis dans le groupe comprenant les déchets de bois, le papier ou les déchets de matière plastique dans la forme moulue ou déchiquetée.

2. Procédé selon la revendication 1, caractérisé en ce que l'oxyde de calcium est ajouté au goudron extrait de manière telle que la réaction exothermique qui se produit pendant le mélange du goudron acide progresse graduellement à une température inférieure à 100°C.

3. Procédé selon les revendications 1 ou 2 caractérisé en ce que l'oxyde calcium est ajouté sous forme de chaux éteinte.

4. Procédé selon l'une des revendications 1 à 3, caractérisé en ce que le goudron neutralisé est mélangé est calibré jusqu'à ce que le produit final présente une dimension granulaire de maximum 10 mm.
